# EUROPÄISCHE PATENTSCHRIFT

(11) **EP 1 498 286 B1**
(45) Veröffentlichungstag und Bekanntmachung des Hinweises auf die Patenterteilung: **07.05.2008**
(21) Anmeldenummer: 03468005.8
(22) Anmeldetag: 16.07.2003
(51) Int. Cl.: B60B 33/02

(54) **Transportrad mit Bremse für Wagen**
Castor with brake for vehicle
Roulette pivotante avec frein pour véhicule

(43) Veröffentlichungstag der Anmeldung: 19.01.2005
(73) Patentinhaber: LIV Kolesa predelava kovin in plastike, d.o.o. Postojna, 6230 Postojna (SI)
(72) Erfinder: Rovan, Joze, 6232 Planina (SI)
(74) Vertreter: Primozic, Alenka

(56) Entgegenhaltungen:
- DE-A- 1 580 179
- GB-A- 926 202
- US-A- 4 349 937

## Beschreibung

### Gegenstand der Erfindung

Der Gegenstand der Erfindung ist ein Transportrad mit Bremse für Wagen.

### Technisches Problem

Das technische Problem, das durch diese Erfindung gelöst wird, liegt darin, eine solche Bremse eines Transportrades für Wagen zu schaffen, dass ihre Brems- und Löseelemente ungeachtet der Lage des Rades unter dem Wagen mit dem Fuß erreichbar sein werden, wobei das Verfahren und die nötige Brems- und Lösekraft auf allen Elementen zum Bremsen und Lösen gleich sein werden.

### Stand der Technik

Bisher bekannte Bremsen für Wagenräder sind mit einem Fußhebel ausgestattet, durch den ein Bremshebel, der an die Lauffläche des Rades andrückt, betätigt wird. Das Lösen erfolgt durch das Bewegen des Fußhebels in der Gegenrichtung, normalerweise nach oben. Falls ein solches Rad an einem Wagen oder ähnlichem eingebaut wird, passiert es oft, dass der Fußhebel nicht erreichbar ist. Deswegen muss der Wagen bewegt werden, um das Rad in die Richtung zu drehen, die das Erreichen des Fußhebels ermöglicht.

Gemäß DE 1 580 179 A (Kuszelfabrik Schulte & Co.) ist eine andere Ausführung von Bremsen bekannt, die zwei in verschiedene Richtungen orientierte Fußhebel umfasst. Daraus ergeben sich zwei Möglichkeiten, den einen oder den anderen Fußhebel zu erreichen, um das Rad zu bremsen oder zu lösen. Wenn das Rad mit einem Fußhebel gebremst ist, muss man nachdenken, in welcher Richtung (nach oben oder nach unten) man den einen oder den anderen Fußhebel bewegen muss, um das Rad zu lösen. Außerdem wird durch nur zwei Fußhebel des Transportrades nicht in jeder Position des Rades unter dem Wagen ermöglicht, dass der Benutzer mit seinem Fuß mindestens einen Fußhebel betätigen kann.

Aus den obigen Ausführungen geht ein Bedürfnis nach einer solchen Bremse für ein Wagenrad hervor, die ungeachtet der Lage des Rades unter dem Wagen das Erreichen mindestens eines Fußhebels ermöglichen wird und die auf allen Fußhebeln die gleiche Betätigungsrichtung für Bremsen und Lösen unter Anwendung der gleichen Kraft.

### Lösung des technischen Problems

Das dargestellte technische Problem wird durch die erfindungsgemäße Bremse gelöst, die dadurch gekennzeichnet ist, das sie drei Pedale aufweist, und zwar ein Pedal auf einer Seite des Rades neben der Laufflläche und die anderen zwei Pedale auf der Gegenseite des Rades, und zwar an dessen Flanken. Die anderen zwei Pedale sind miteinander ortsfest verbunden und haben mit dem ersten Pedal Kontakt über einen Hebel, der ermöglicht, dass sich beim Betätigen irgendeines Pedals zum Bremsen bzw. Lösen die beiden anderen Pedale in der gleichen Richtung bewegen. So befinden sich immer alle drei Pedale in der gleichen Lage und in der gleichen Funktion. Wenn irgendein Pedal zwecks Bremsens nach unten gedrückt wurde, wird dann das Rad durch die Aufwärts-Betätigung eines beliebigen Pedals, das im betreffenden Augenblick am besten zugänglich ist, gelöst.

Gleichzeitig arbeitende Pedale wirken auf eine Bremse, die auf einem Ende mit einem der Pedale drehbar verbunden ist und auf dem anderen Ende im gelösten Zustand auf eine Feder gestützt frei liegt, während sie im gebremsten Zustand mit dem freien Ende an die Befestigungsplatte so gestützt ist, dass das Schwenken der Radgabel in Bezug auf die Befestigungsplatte unmöglich ist, wobei sie mit dem mittleren Teil an die Lauffläche des Rades derart anliegt, dass dieses wegen der Reibung mit der Bremse gebremst wird.

Im Einzelnen wird die Erfindung in der Folge anhand eines Ausführungsbeispiels und der beigelegten Zeichnung näher erläutert. Es zeigen:

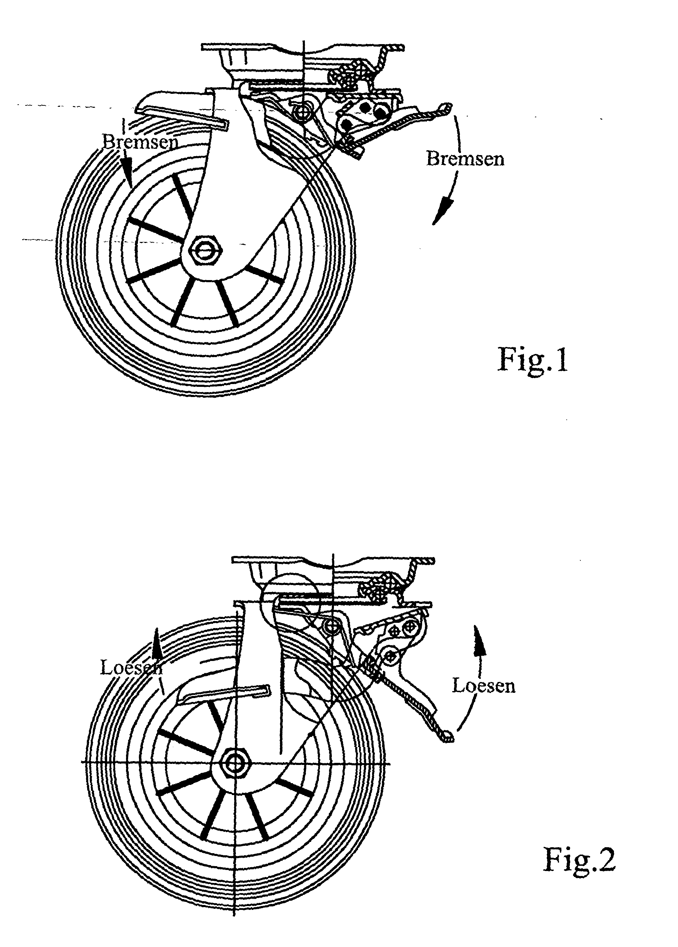

- Fig. 1: einen teilweisen Längsschnitt des erfindungsgemäßen Rades für Wagen mit Bremse im gelösten, d.h. Fahrzustand,
- Fig. 2: das Gleiche, doch im Bremszustand,

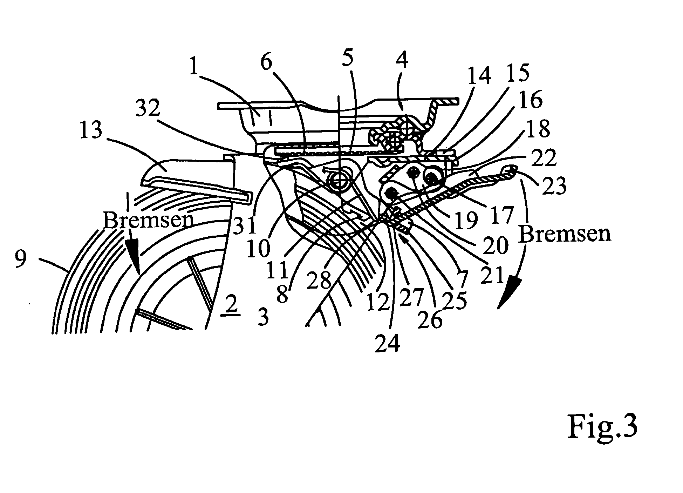

- Fig. 3: einen teilweisen Längsschnitt des erfindungsgemäßen Rades im vergrösserten Maßstab.
- Fig. 5: eine Aufsicht des erfindungsgemäßen Rades mit Bremse für Wagen,

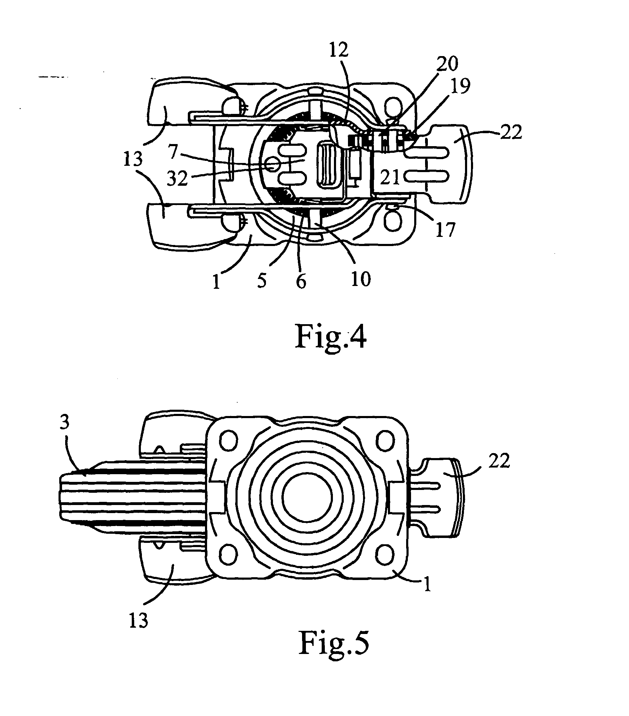

- Fig. 4: eine Untenansicht auf das Gleiche, jedoch ohne Rad,

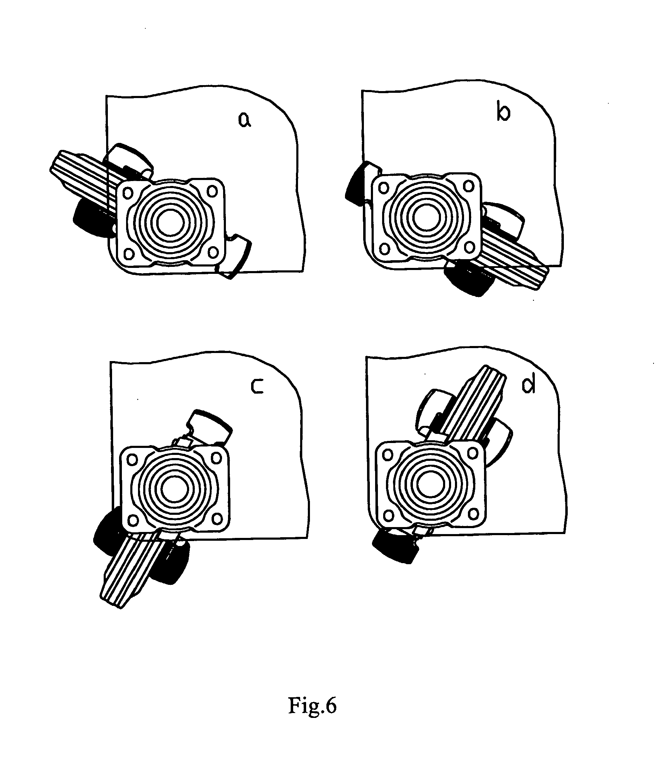

- Fig. 6: Aufsichten der erfindungsgemäßen Räder in verschiedenen Verschiebungen in Bezug auf die Wagenecke.

Das Transportrad mit Bremse für Wagen besteht aus einer Befestigungsplatte 1, unter der eine Gabel 2 mit einem Rad 3 drehbar gelagert ist. Ein Lager 4, der die Befestigungsplatte 1 und die Gabel 2 verbindet, ist im Sinne eines axialen Kugellagers ausgeführt, dessen Verbindungsring 5 an der Seite der Gabel 2 mit einem gezackten Ring 6 ausgeführt ist. In der Gabel 2 ist eine Bremse 7, deren Bremsbacke 8 auf die Lauffläche 9 des Rades 3 einwirkt, schwenkbar gelagert. Auf einem Querbolzen 10 ist eine Feder 11, die die Bremse 7 in die Löselage drängt, angeordnet.

In der Gabel 2 ist auf der Seite der Bremsbacke 8 ein zweifaches Bremspedal 12 vorgesehen, dessen zwei Pedalschenkel 13 an den Flanken des Rades 3 verlaufen und das mit seinem Querschenkel 14, der die Pedalschenkel 13 verbindet, unter einem Querteil 15 der Gabel 2 anlehnbar gelagert ist, so dass es um seinen Querrand 16 schwenkbar ist.

Ein sich auf der Gabel 2 befindender Bolzen 17 läuft durch Löcher 18 in den Pedalschenkeln 13 des Pedals 12, wobei der Querschnitt der Löcher 18 größer als der des Bolzens 17 ist, wodurch die Löcher 18 eine Begrenzung der Schwenkung des Pedals 12 um seinen Querrand 16 ermöglichen.

Im Inneren des Pedals 12 unter seinem Querschenkel 14 ist ein zweiarmiger Hebel 19 auf dem Bolzen 17 und gleichzeitig auf einem an den Pedalschenkeln 13 des zweifachen Pedals 12 angeordneten Bolzen 20 gelagert.

Am Gegenende des Hebels 19 vom Bolzen 17 her gesehen ist auf einem Bolzen 21 ein einfaches Bremspedal 22 schwenkbar gelagert, dessen Ende 23 weg vom Rad 3, doch in seiner Längsebene frei hinausragt und zur Betätigung mit dem Fuß beim Bremsen bzw. Lösen vorgesehen ist. Ein gegenseitiges Ende 24 des Pedals 22 am Bolzen 21 ist zusätzlich an einem freien Ende 25 der Bremse 7 an der Seite der Bremsbacke 8 drehbar gelagert. Vorzugsweise ist diese Lagerung 26 als eine formschlüssige Verbindung ausgeführt, und zwar als ein Querschlitz 27 auf der Bremse 7 und eine darin liegende gebogene Fahne 28 am freien Ende 24 des Pedals 22. Auf dem Hebel 19 befinden sich die Bolzen 17, 20, 21 in den Ecken eines scheinbaren Dreiecks.

Die Bremse 7 liegt gestützt an die Feder 11, so dass ihr gegeseitiges Ende 31 mit einer Zacke 32 frei am gezackten Ring 6 des Ringes 5 liegt. Wenn das Pedal 12 oder 22 in die Bremslage des Rades 3 geschwenkt wird, schnappt bei dessen Einwirken auf das freie Ende 25 der Bremse 7 das gegenseitige Ende 31 der Bremse 7 mit der Zacke 32 in den gezackten Ring 6 des Ringes 5 ein.

Die Bremse funktioniert derart, dass beim Niederdrücken des Fußes auf das freie Ende 23 des einfachen Pedals 22 dieses in der Lagerung 26 auf der Bremse 7 schwenkt, die, gestützt an die Feder 11, mit ihrem gegenseitigen Ende 31 in den gezackten Ring 6 des Verbindungsringes 5 einschnappt, wobei gleichzeitig der Hebel 19 wegen der Verbindung mit der Bremse 7 im Bolzen 21 auf dem Bolzen 17 schwenkt. Da jedoch der Hebel 19 und das zweifache Pedal 12 durch den Bolzen 20 miteinander verbunden sind, schwenkt das zweifache Pedal 12 auch nach unten um seinen Querrand 16 des Querschenkels 14, der unter dem Querteil 15 der Gabel 2 anliegt, und stellt sich ebenfalls in die Bremslage, ohne dass man es mit dem Fuß betätigt hätte. Wegen der Lagerung 26, die das einfache Pedal 22 und die Bremse 7 verbindet, nähert sich während der Abwärts-Schwenkung des einfachen Pedals 22 in der Bremsrichtung die Bremse 7 der Lauffläche 9 des Rades 3 und bremst es.

Falls zum Bremsen das zweifache Pedal 12 an seinem linken oder rechten Schenkel 13 nach unten gedrückt wird, schwenkt dieses um seinen Querrand 16 und über den Bolzen 17 dreht sich der Hebel 19, der darin gelagerte Bolzen 21 schwenkt das einfache Pedal 22 und dieser schwenkt in der Lagerung 26 die Bremse 7, die im gezackten Ring 6 des Verbindungsringes 5 einschnappt und bei gebremstem Rad 3 zugleich auch das Schwenken der Gabel 2 um die Befestigungsplatte 1 blockiert.

Das Lösen erfolgt durch das Verschieben irgendeines Pedals 12 bzw. 22 in die Gegenrichtung, d.h. aufwärts, wobei sich auch das andere Pedal 22 bzw. 12 und zusammen mit ihnen andere Elemente in die umgekehrte Richtung, wie es bei der Beschreibung des Bremsens und der Blockierung der Schwenkung der Gabel angeführt wurde, verschieben.

Es ist selbstverständlich, dass anhand der Beschreibung der obigen Erfindung bzw. des Ausführungsbeispiels auch andere Ausführungen möglich sind, ohne die in den beigelegten Patentansprüchen definierten Neuheiten und Erfindungsmerkmale zu umgehen.

## Patentansprüche

1. Transportrad mit Bremse für Wagen bestehend aus einer Befestigungsplatte (1), unter welcher eine Gabel (2) mit einem Rad (3) drehbar gelagert ist, wobei sich in der Gabel (2) eine schwenkbar gelagerte Bremse (7), deren Bremsbacke (8) auf die Lauffläche (9) des Rades (3) einwirkt, befindet, wobei in der Gabel (2) ein zweifaches Bremspedal (12), dessen Pedalschenkel (13) an den Flanken des Rades (3) verlaufen, und ein einfaches, in der Gegenrichtung orientiertes Pedal (22), das mit dem zweifachen Pedal (12) durch einen Hebel (19) und ebenso mit der Bremse (7), die gleichzeitig zum Bremsen auch das Schwenken der Gabel (2) um die senkrecht zur Befestigungsplatte (1) liegenden Achse blockiert, verbunden ist, angeordnet sind, wobei die beiden Pedale (12 und 22) wegen deren Verbindung gleichzeitig und gleich funktionieren, ungeachtet dessen, welches Pedal man mit dem Fuß betätigt, **dadurch gekennzeichnet, dass** das zweifache Pedal (12) mit seinem Querschenkel (14), der die Pedalschenkel (13) verbindet, unter einem Querteil (15) der Gabel (2) anlehnbar gelagert ist, so dass es um einen Querrand (16) des Querschenkels (14) schwenkbar ist, wobei ein sich in der Gabel (2) befindender Bolzen (17) durch zwei Löcher (18) in den Pedalschenkeln (13) des zweifachen Pedals (12) verläuft und der Querschnitt der Löcher (18) größer als der des Bolzens (17) ist, wodurch die Löcher (18) eine Begrenzung der Schwenkung des Pedals (12) um seinen Querrand (16) ermöglichen.

2. Transportrad mit Bremse für Wagen nach Anspruch 1, **dadurch gekennzeichnet, dass** unter dem Querschenkel (14) des zweifachen Pedals (12) ein Hebel (19) auf einem Querbolzen (17) schwenkbar gelagert ist und zugleich dadurch ein in den Pedalschenkeln (13) schwenkbar gelagerter Bolzen (20) verläuft, und gleichzeitig am Gegenende des Hebels (19), vom Bolzen (17) her gesehen, auf dem Bolzen (21) das einfache Bremspedal (22) schwenkbar gelagert ist, dessen Ende (24) am Bolzen (21) zusätzlich mit einer Lagerung (26) an einem freien Ende (25) der Bremse (7) an der Seite der Bremsbacke (8) ausgeführt ist.

3. Transportrad mit Bremse für Wagen nach Ansprüchen 1 bis 2, **dadurch gekennzeichnet, dass** die Lagerung (26) als eine formschlüssige Verbindung ausgeführt ist, und zwar als ein Querschlitz (27) auf der Bremse (7) und eine darin liegende gebogene Fahne (28) am freien Ende (24) des Pedals (22).

## Claims

1. A castor with a brake for a vehicle consisting of a fastening plate (1) under which a fork (2) with a wheel (3) is rotatably mounted, wherein a brake (7) is pivotably mounted in the fork (2), the break pad (8) of which acts on a running surface (9) of the wheel (3), wherein a double break pedal (12), the pedal shanks (13) of which extend along the flank of the wheel (3), and a single pedal (22), oriented in the opposite direction, connected with the double pedal (1) with a lever (19) and also with the brake (7), which simultaneously with the breaking blocks the pivoting of the fork (2) around an axis lying perpendicularly to the fastening plate (1) are mounted in the fork (2), wherein both pedals (12 and 22) due to their interconnection act simultaneously and equally regardless of which of them is actuated with a leg, **characterised in that** the double pedal (12) with its transversal shank (14), which interconnects the pedal shanks (13), is mounted in an abutting manner under a transversal part (15) of the fork (2), so that it is pivotable around a transversal edge (16) of the transversal shank (14), wherein a bolt (17), mounted in the fork (2), extends through two holes (18) in the pedal shanks (13) of the double pedal (12) and the cross section of the holes (18) is bigger than the cross section of the bolt (17), whereby the holes (18) enable limitation of the turning of the pedal (12) around its transversal edge (16).

2. The castor with the brake for the vehicle according to claim 1, **characterised in that** the lever (19) is pivotably mounted on the transversal bolt (17) under the transversal shank (14) of the double pedal (12) and through which concurrently extends a bolt (20) pivotably mounted in the pedal shanks (13), on the opposite end of the lever (19) relative to the bolt (17) a position break pedal (22) is pivotably mounted on the bolt (21), the end (24) of which at the bolt (21) is formed additionally by a bearing (26) at the free end (25) of the brake (7) on the side of the break pad (8).

3. The castor with the brake for the vehicle according to claims 1 to 2, **characterised in that** bearing (26) is formed as a positive connection, namely as a transversal notch (27) on the brake (7) and a bent tongue lying in the notch (27) on the free end (24) of the pedal (22).

## Revendications

1. Roue de transport avec frein pour voiture comprenant une plaque de fixation (1), sous laquelle une fourche (2) avec une roue (3) est montée de façon rotative, un frein (7) monté pivotant, dont la mâchoire de frein (8) agit sur la surface de frottement (9) de la roue (3), se trouvant dans la fourche (2), une double pédale de frein (12), dont les branches de pédale (13) sont agencées sur les flancs de la roue (3), et une pédale (22) simple, orientée dans la direction opposée, laquelle est reliée à la double pédale (12) par un levier (19) et de la même façon au frein (7), lequel bloque simultanément pour le freinage également le basculement de la fourche (2) autour de l'axe situé perpendiculairement à la plaque de fixation (1), étant disposées dans la fourche (2), les deux pédales (12 et 22) fonctionnant simultanément de la même façon du fait de leur liaison, indépendamment de la pédale avec laquelle on actionne avec le pied, **caractérisé en ce que** la pédale (12) double est montée en s'appuyant avec sa branche transversale (14), qui relie les branches de pédale (13), sous une partie transversale (15) de la fourche (2), de sorte qu'elle peut basculer autour d'un bord transversal (16) de la branche transversale (14), un boulon (17) se trouvant dans la fourche (2) passant à travers deux trous (18) dans les branches de pédale (13) de la pédale (12) double et la section des trous (18) étant supérieure à celle du boulon (17), les trous (18) permettant une limitation du basculement de la pédale (12) autour de son bord transversal (16).

2. Roue de transport avec frein pour voiture selon la revendication 1, **caractérisé en ce que** sous la branche transversale (14) de la double pédale (12), un levier (19) est monté basculant sur un boulon transversal (17) et dans le même temps un boulon (20) monté basculant dans les branches de pédale (13) est ainsi agencé, et la pédale de frein (22) simple est montée basculante sur le boulon (21) simultanément sur l'extrémité opposée du levier (19), vue à partir du boulon (17), pédale dont l'extrémité (24) est réalisée sur le boulon (21) en supplément avec un logement (26) sur une extrémité (25) libre du frein (7) sur le côté de la mâchoire de frein (8).

3. Roue de transport avec frein pour voiture selon les revendications 1 et 2, **caractérisé en ce que** le logement (26) est réalisé sous forme d'une liaison par complémentarité de formes, et ce sous la forme d'une fente transversale (27) sur le frein (7) et d'une patte (28) courbée et située à l'intérieur sur l'extrémité (24) libre de la pédale (22).
